# EUROPÄISCHE PATENTSCHRIFT

(11) **EP 3 528 165 B1**
(45) Veröffentlichungstag und Bekanntmachung des Hinweises auf die Patenterteilung: **15.09.2021**
(21) Anmeldenummer: 19156926.8
(22) Anmeldetag: 13.02.2019
(51) Int. Cl.: G06F 21/72, G06F 21/79, G06F 21/77, H04L 29/06, H04L 9/32

(54) **VERFAHREN ZUM VERARBEITEN EINES KRYPTOGRAPHISCHEN SCHLÜSSELS UND PROZESSORCHIPKARTE**
METHOD FOR PROCESSING A CRYPTOGRAPHIC KEY AND PROCESSOR CHIP CARD
PROCÉDÉ DE TRAITEMENT D'UNE CLÉ CRYPTOGRAPHIQUE ET CARTE À PUCE PROCESSEUR

(30) Priorität: 15.02.2018 DE 102018202357
(43) Veröffentlichungstag der Anmeldung: 21.08.2019
(73) Patentinhaber: Bundesdruckerei GmbH, 10969 Berlin (DE)
(72) Erfinder: Morgner, Frank, 15537 Grünheide (DE)
(74) Vertreter: Glawe, Delfs, Moll

(56) Entgegenhaltungen:
- EP-A1- 2 575 084
- EP-A1- 3 252 550
- DE-A1-102006 021 389
- DE-A1-102013 202 322
- DE-A1-102015 225 275

## Beschreibung

### Technisches Gebiet

Die vorliegende Erfindung betrifft ein Verfahren zum Verarbeiten eines kryptographischen Schlüssels und ein Datenspeichermedium.

### Beschreibung des Standes der Technik

Verfahren zum Verarbeiten eines kryptographischen Schlüssels, wie insbesondere im Zusammenhang mit der Erzeugung digitaler Signaturen, der Authentifizierung von Ausweisinhabern u.dgl., sind bekannt. In diesem Zusammenhang finden Chipkarten (auch Smartcards genannt) mit einem Mikroprozessor, über den auf die gespeicherten Daten zugegriffen werden kann, Verwendung (vgl. DE 196 10 070 A1).

Aus der US 2016/0072628 A1 ist ein Verfahren zur Verwaltung eines kryptographischen Schlüssels in einem sicheren Mikrocontroller bekannt. Der sichere Mikrocontroller umfasst einen CPU-Kern, einen kryptographischen Prozessor, einen universellen Speichercontroller, Schlüsselquellen und Busse für Daten, Adressen und Schlüssel. Der kryptographische Prozessor ist mit dem CPU-Kern und den Schlüsselquellen gekoppelt und wird verwendet, um die Logikadressen abzubilden, die Datenintegrität zu überprüfen und Daten zu verschlüsseln/entschlüsseln bzw. zu formatieren. Ein oder mehrere Schlüssel werden von den Schlüsselquellen an den kryptographischen Prozessor für eine kryptographische Operation wie Datenverschlüsselung, Entschlüsselung, Formatierung, Integritätsberechnung und Integritätsprüfung bereitgestellt. Die universelle Speichersteuerung ist mit dem kryptographischen Prozessor gekoppelt und ermöglicht den Zugriff auf den verschlüsselten und integritätsgeschützten Speicher.

Die DE 10 2015 225275 A1 betrifft ein ID-Token mit einem ersten Mikrocontroller und einem geschützten zweiten Mikrocontroller. Ein kryptographischer Schlüssel ist auf dem geschützten Mikrocontroller hinterlegt, und eine Authentisierung des geschützten Mikrocontrollers gegenüber dem ersten Mikrocontroller ist vorgesehen.

Kryptographische Schlüssel sind somit typischerweise im geschützten Speicher einer Smartcard abgelegt und werden in einem direkt zugeordneten sicheren kryptographischen Prozessor verarbeitet. Bei einem Abgleich verlassen die Daten den sicheren Mikrocontroller nicht, sondern die Prüfung wird in dem sicheren Mikrocontroller selbst durchgeführt, wodurch ein hoher Datenschutz sichergestellt ist.

Mit fortschreitender Computerentwicklung und insbesondere im Hinblick auf eine Entwicklung eines universellen Quantencomputers erhöht sich das Risiko, dass klassische Kryptographie unter Einsatz geeigneter Algorithmen wie bspw. dem Grover-Algorithmus oder Shor-Algorithmus gebrochen werden kann, so dass auf alternative kryptographische Verfahren basierend auf mathematischen Gittern, multivariaten Polynomen, kryptographischen Hashfunktionen oder fehlerkorrigierenden Codes zurückgegriffen werden muss. Diesen häufig als "Post Quantum Cryptography" oder "PQC" bezeichneten alternativen Verfahren ist jedoch gemein, dass sie lange Schlüssel haben und/oder aufwendig zu berechnen sind. Dies führt dazu, dass diese alternativen Verfahren nicht für den Einsatz in ressourcenbeschränkten Geräten bzw. Hardwareumgebungen, wie sie bspw. gängige Smartcards darstellen, geeignet sind.

### Zusammenfassung der Erfindung

Ausgehend hiervon werden erfindungsgemäß ein Verfahren zum Verarbeiten eines kryptographischen Schlüssels mit den Merkmalen des Anspruchs 1 sowie ein Datenspeichermedium mit den Merkmalen des Anspruchs 6 vorgeschlagen.

Die Erkenntnis der Erfindung liegt darin begründet, aus dem sicheren Schlüsselspeicher eines sicheren Mikrocontrollers den zu verarbeitenden kryptographischen Schlüssel zu exportieren, um die anstehenden Operationen der Verarbeitung auf einem leistungsfähigeren Chip (Peripheriecontroller) durchzuführen. Der erfindungsgemäße Ablauf wird mittels eines Datenspeichermediums ausgeführt, das mit einem sicheren Mikrocontroller und einem Peripheriecontroller als physikalische Einheit ausgebildet ist. Typische Erscheinungsformen eines erfindungsgemäßen Datenspeichermediums für kryptographische Schlüsselanwendungen können insb. Datenträger wie Token, sog. Dongles (wie bspw. in USB-Stiftform), Chipkarten, Prozessorchipkarten u.dgl. sein.

Unter einem "sicheren Mikrocontroller" im Sinne der vorliegenden Erfindung ist ein Mikrocontroller zu verstehen, der die sicherheitstechnischen Anforderungen für kryptographische Anwendungen erfüllt (engl. secure cryptoprocessor). Derartige Mikrocontroller oder Prozessoren verfügen typischerweise über keine sehr hohe Rechenleistung (niedrige Taktrate, niedrige MIPS), um einen ressourcenschonenden Betrieb zu gewährleisten, sind aber zweckorientiert auf die Implementierung eines konkreten Algorithmus spezialisiert, weshalb sie sich in der Praxis als wenig geeignet für PQC-Verfahren erweisen.

Unter einem "Peripheriecontroller" im Sinne der vorliegenden Erfindung ist ein Mikrocontroller zu verstehen, der eine höhere CPU-Leistungsfähigkeit und/oder einen größeren Arbeitsspeicher aufweist, als ein typischer sicherer Mikrocontroller und in Ergänzung zu dem sicheren Mikrocontroller vorgesehen ist. Sollten weitere periphere Einrichtungen wie bspw. eine drahtlose Schnittstelle und/oder Eingabe-/Ausgabeelement o.dgl. vorhanden sein, kann der Peripheriecontroller auch (zusätzlich) zu deren Verwaltung eingerichtet sein.

Eine Authentisierung kann mittels eines Nutzergeheimnisses erfolgen, bspw. auf der Grundlage einer eingelesenen Kennung wie Nutzerkennung (PIN) und/oder biometrischer Kennung (Fingerabdruck, Irisbild o.dgl.). Die Kennung gibt der Nutzer über den Peripheriecontroller ein, der das Geheimnis an den sicheren Mikrocontroller übermittelt, der den Vergleich mit seinen Referenzdaten ausführt. In dieser Variante speichert nur der sichere Mikrocontroller das Geheimnis.

In anderer Ausgestaltung kann die Authentisierung auf der Grundlage einer kryptographischen Verschlüsselung erfolgen. Hierbei verwendet der Peripheriecontroller zur Authentisierung gegenüber dem sicheren Mikrocontroller einen kryptographischen Schlüssel, der in dem Peripheriecontroller selbst gespeichert ist, bspw. in einer sogenannten vertrauenswürdigen Laufzeitumgebung (Trusted Execution Environment; TEE). In dieser Variante speichern sowohl der sichere Mikrocontroller als auch der Peripheriecontroller das Geheimnis, bei dem es sich um einen symmetrischen Schlüssel oder auch ein asymmetrisches Schlüsselpaar handeln kann.

In Ausgestaltung kann die Authentisierung auf der Grundlage einer sogenannten physisch nicht klonbaren Funktion (physical unclonable function; PUF) erfolgen. In dieser Ausgestaltung ist in dem Peripheriecontroller kein eigener Schlüssel gespeichert, sondern das "Geheimnis" besteht in einer Hardwarestruktur, die eine eindeutige Identifizierung des Halbleiters (hier: des Peripheriecontrollers) gestattet. Es handelt sich somit um den Fingerabdruck des Controllers. Der sichere Mikrocontroller misst eine Ausgabe des Peripheriecontrollers und vergleicht diese mit seinen Referenzdaten, bevor er die Authentisierung freigibt.

Weitere Vorteile und Ausgestaltungen der Erfindung ergeben sich aus den Unteransprüchen, der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

### Kurzbeschreibung der Zeichnung

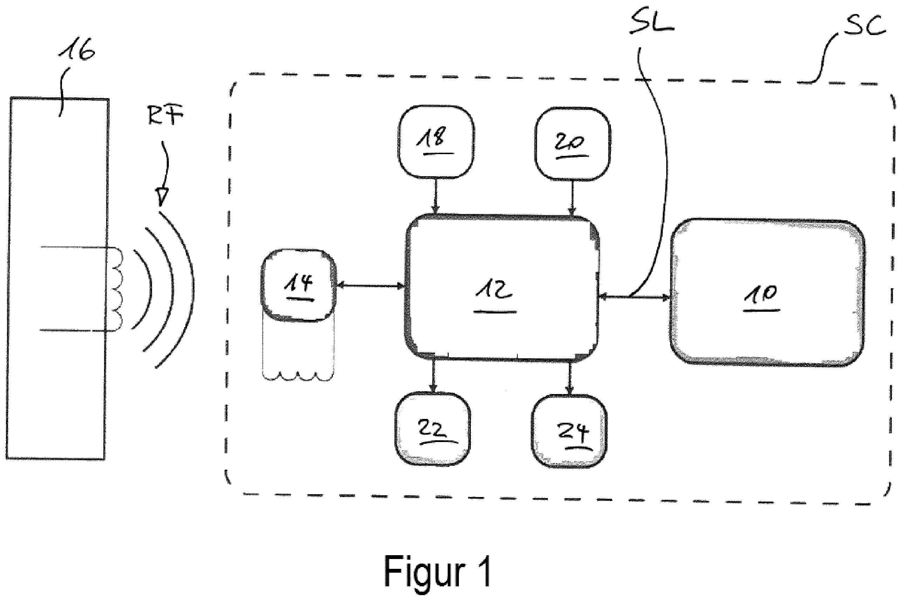

Figur 1 zeigt in stark schematischer Blockdarstellung ein erfindungsgemäßes System zur Authentisierung eines Nutzers gegenüber einem Diensteanbieter mittels eines elektronischen Ausweiselements des Nutzers.

### Ausführliche Beschreibung

Figur 1 zeigt in stark schematisierter Blockdarstellung ein erfindungsgemäßes Datenspeichermedium in Form einer Prozessorchipkarte oder Smartcard SC. Die Chipkarte SC ist als physikalische Einheit mit zwei in an sich bekannter Art und Weise integrierten Prozessoren oder Mikrokontrollern ausgebildet und umfasst einen (für kryptographische Anwendungen üblichen) sicheren Mikrocontroller 10 und zusätzlich einen Peripheriecontroller 12, dessen Rechenleistung ausreichend bemessen ist, um eingangs bereits erwähnte alternative kryptographische Verfahren, die einen höheren Rechenaufwand benötigen, anwenden zu können. Insbesondere bietet es sich erfindungsgemäß an, einen für eventuell vorhandene Kartenperipherie (also periphere Einrichtungen der Prozessorchipkarte wie übliche Kommunikationsschnittstellen (kontaktgebundene oder kontaktlose) bzw. Eingabe-/Ausgabeelemente) ohnehin vorgesehenen handelsüblichen Mikrocontroller mit einer gegenüber dem sicheren Mikrocontroller höheren Rechenleistung zu verwenden.

Die beiden Mikrocontroller 10 und 12 sind mittels einer Datenleitung SL verbunden, die auf eine sichere Datenverbindung insbesondere im Sinne der ISO-Norm 7816, Stand 1. November 2016, ausgelegt ist.

Die Chipkarte SC umfasst des weiteren ein Koppelelement 14 zur kontaktlosen Datenübertragung mit einem externen Terminal oder Lesegerät 16, bspw. für eine Funkverbindung gemäß ISO 14443 vom März 2016.

Die erfindungsgemäße Chipkarte SC kann des weiteren ein oder mehrere Eingabeelemente umfassen. In dem dargestellten Ausführungsbeispiel sind dies ein als Fingerabdrucksensor ausgebildetes erstes Eingabeelement 18 und ein als sogenanntes "PIN-Pad" ausgebildetes zweites Eingabeelement 20. Das bzw. die Eingabeelemente sind - wie dargestellt - mit dem Peripheriecontroller 12 verbunden sein.

Entsprechend kann die Chipkarte SC ein oder mehrere Ausgabeelemente umfassen, bei denen es sich um ein optisches Ausgabeelement 22 (wie eine Anzeigeeinheit oder eine oder mehrere Leuchtdioden) und/oder ein akustisches Ausgabeelement 24 (wie einen Lautsprecher oder ein Pieptongenerator) handeln kann. Das bzw. die Ausgabeelemente können - wie dargestellt - mit dem Peripheriecontroller 12 verbunden sein. Es liegt im Bereich des fachmännischen Könnens, anstelle der beschriebenen Chipkarte andere Ausgestaltungen eines Datenspeichermediums vorzusehen, wie bspw. einen sog. Token oder einen Dongle, bspw. in Form eines USB-Stiftes, o.dgl.

Im Betrieb der erfindungsgemäßen Prozessorchipkarte SC erfolgt zunächst eine Authentisierung zwischen dem sicheren Mikrocontroller 10 und dem Peripheriecontroller 14. Optional wird dann über die Datenverbindung SL ein gesicherter Ende-zu-Ende-Kanal (sichere bzw. verschlüsselte Datenverbindung) aufgebaut.

In einem nächsten Schritt wird der in einem Speicherbereich des sicheren Mikrocontrollers 10 hinterlegte kryptographische Schlüssel von dem sicheren Mikrocontroller 10 an den Peripheriecontroller 12 übertragen, der das gewünschte kryptographische Verfahren ausführt und das Ergebnis der Berechnung an den sicheren Mikrocontroller 10 übergibt. Dieses Vorgehen bietet sich desto mehr an, je aufwendiger das verwendete Kryptographieverfahren (wie bspw. PQC-Kryptographie) ist.

Als Grundlage für die Bestätigung einer Authentisierungsanfrage dient bspw. die Eingabe bzw. das Einlesen einer Kennung. Dabei kann es sich bspw. um eine Nutzerkennung (Nutzergeheimnis wie PIN) und/oder eine biometrische Kennung wie Fingerabdruck, Irisbild o.a. handeln. Die Kennung(en) wird bzw. werden von dem Nutzer über das bzw. die Eingabeelemente 18, 20 in den Peripheriecontroller 12 eingegeben, der die Eingaben an den sicheren Mikrocontroller 10 weiterleitet, in welchem dann ein Vergleich mit den (ausschließlich in dem sicheren Prozessor) hinterlegten Referenzdaten durchgeführt wird.

Alternativ kann die Authentisierung mittels eines sogenannten TEE-Schlüssels (TEE: Trusted Execution Environment) ausgeführt werden, der in einer sicheren bzw. vertrauenswürdigen Laufzeitumgebung des Peripheriecontrollers 12 hinterlegt ist. Dieser (symmetrische) kryptographische Schlüssel wird zur Authentisierung gegenüber dem sicheren Mikrocontroller 10 verwendet, der eine eigene Kopie des Schlüssels besitzt. Wie bereits eingangs erwähnt, ist auch eine asymmetrische Verschlüsselung möglich.

Weiter alternativ kann die Authentisierung zwischen sicherem Mikrocontroller 10 und Peripheriecontroller 12 mittels einer sogenannten "Physical Unclonable Function" (PUF) erfolgen, wonach sich der Peripheriecontroller 12 gegenüber dem sicheren Mikrocontroller 10 mittels eines kryptographischen Schlüssels bzw. einer kryptographischen Funktion, die über eine PUF bereitgestellt wird, authentisiert. Die PUF stellt eine einzigartige Identität und kryptographischen Schlüssel aus Hardwareeigenschaften bereit, indem Fertigungsschwankungen in einem Chip ausgewertet werden und daraus ein individuelles Signal erzeugt wird. In dem sicheren Mikrocontroller 10 befindet sich ein Referenzschlüssel, anhand dessen die Authentisierung erfolgen kann.

Die Erfindung ermöglicht somit die Durchführung von sicherheitsrelevanten Funktionen bzw. Berechnungen anhand eines kryptographischen Schlüssels, die mangels Rechenleistung mit einer konventionellen Smartcard (also dem sicheren Mikrocontroller alleine) nicht durchführbar wären, wobei gleichzeitig die schützenswerten Daten und Geheimnisse ausschließlich in dem sicheren Mikrocontroller permanent gehalten werden, indem eine Nutzung des kryptographischen Schlüssels außerhalb des kryptographischen Schlüsselspeichers ermöglicht wird. Dieses erfindungsgemäße Konzept ermöglicht zudem die Verwendung neuester (leistungsfähiger) Chip-Generationen in dem Peripheriecontroller, da aufgrund der Sicherheitsverteilung für den Peripheriecontroller nicht unbedingt eine Evaluierung vor Einsatz erforderlich ist. Auch die Verwendung von Updates für den Peripheriecontroller vereinfacht sich dadurch (bspw. Updates zum Bugfixing oder zur Nutzung neuer kryptographischer Verfahren. Auch können bspw. weitere Co-Prozessoren zur Erleichterung der Rechenarbeiten im Zusammenhang mit der Kryptographie und/oder anderen Aufgaben wie Bildverarbeitung u.a. integriert werden.

## Patentansprüche

1. Verfahren zum Verarbeiten eines kryptographischen Schlüssels in einer Hardwareumgebung, die einen sicheren Mikrocontroller (10) und einen Peripheriecontroller (12) umfasst und als physikalische Einheit ausgebildet ist, und der zu verarbeitende kryptographische Schlüssel in dem sicheren Mikrocontroller (10) hinterlegt ist, wobei nach einer gegenseitigen Authentisierung von sicherem Mikrocontroller (10) und Peripheriecontroller (12) eine Übermittlung des kryptographischen Schlüssels von dem sicheren Mikrocontroller (10) an den Peripheriecontroller (12) erfolgt, eine gewünschte kryptographische Operation durch den Peripheriecontroller (12) ausgeführt wird, und ein Ergebnis der kryptographischen Operation von dem Peripheriecontroller (12) an den sicheren Mikrocontroller (10) übermittelt wird.

2. Verfahren nach Anspruch 1, bei dem nach der gegenseitigen Authentisierung von sicherem Mikrocontroller (10) und Peripheriecontroller (12) eine verschlüsselte Datenverbindung aufgebaut wird.

3. Verfahren nach Anspruch 1 oder 2, bei dem die Authentisierung auf der Grundlage einer eingelesenen Kennung erfolgt.

4. Verfahren nach Anspruch 3, bei dem die Kennung eine Nutzererkennung und/oder biometrische Kennung ist.

5. Verfahren nach Anspruch 1 oder 2, bei dem die Authentisierung auf der Grundlage einer kryptographischen Verschlüsselung erfolgt, oder bei dem die Authentisierung auf der Grundlage einer physisch nicht klonbaren Funktion erfolgt.

6. Datenspeichermedium (SC) für kryptographische Schlüsselanwendungen, das mit einem sicheren Mikrocontroller (10) und einem Peripheriecontroller (12) als physikalische Einheit ausgebildet ist, und mit einem zu verarbeitenden kryptographischen Schlüssel, der in dem sicheren Mikrocontroller (10) hinterlegt ist, wobei zwischen dem sicheren Mikrocontroller (10) und dem Peripheriecontroller (12) eine Datenverbindung (SL) vorgesehen ist, über die nach einer gegenseitigen Authentisierung von sicherem Mikrocontroller (10) und Peripheriecontroller (12) eine Übermittlung des kryptographischen Schlüssels von dem sicheren Mikrocontroller (10) an den Peripheriecontroller (12) erfolgt, und der Peripheriecontroller (12) zur Durchführung einer gewünschten kryptographischen Operation mit dem kryptographischen Schlüssel und Übermittlung eines Ergebnisses der kryptographischen Operation an den sicheren Mikrocontroller (10) ausgelegt ist.

7. Datenspeichermedium (SC) nach Anspruch 6, bei dem die Datenverbindung (SL) zwischen dem sicheren Mikrocontroller (10) und dem Peripheriecontroller (12) eine verschlüsselte Datenverbindung ist.

8. Datenspeichermedium (SC) nach Anspruch 6 oder 7, das des weiteren mindestens ein Eingabeelement (18, 20) umfasst.

9. Datenspeichermedium (SC) nach Anspruch 8, bei dem das mindestens eine Eingabeelement (18, 20) ein Fingerabdrucksensor (18) und/oder ein PIN-Pad (20) und/oder eine kontaktlose Kommunikationsschnittstelle (RF) ist.

10. Datenspeichermedium (SC) nach Anspruch 8 oder 9, bei dem das mindestens eine Eingabeelement (18, 20) mit dem Peripheriecontroller (12) verbunden ist.

## Claims

1. Method for processing a cryptographic key in a hardware environment which comprises a secure microcontroller (10) and a peripheral controller (12) and is embodied as a physical unit, and the cryptographic key to be processed is stored in the secure microcontroller (10), wherein, after a mutual authentication of the secure microcontroller (10) and the peripheral controller (12), the cryptographic key is communicated from the secure microcontroller (10) to the peripheral controller (12), a desired cryptographic operation is performed by the peripheral controller (12), and a result of the cryptographic operation is communicated from the peripheral controller (12) to the secure microcontroller (10).

2. Method according to Claim 1, wherein an encrypted data connection is set up after the mutual authentication of the secure microcontroller (10) and the peripheral controller (12) .

3. Method according to Claim 1 or 2, wherein the authentication is effected on the basis of an identifier read in.

4. Method according to Claim 3, wherein the identifier is a user identifier and/or a biometric identifier.

5. Method according to Claim 1 or 2, wherein the authentication is effected on the basis of a cryptographic encryption, or wherein the authentication is effected on the basis of a physically unclonable function.

6. Data storage medium (SC) for cryptographic key applications which is embodied with a secure microcontroller (10) and a peripheral controller (12) as a physical unit, and with a cryptographic key to be processed, which is stored in the secure microcontroller (10), wherein a data connection (SL) is provided between the secure microcontroller (10) and the peripheral controller (12), via which data connection, after a mutual authentication of the secure microcontroller (10) and the peripheral controller (12), the cryptographic key is communicated from the secure microcontroller (10) to the peripheral controller (12), and the peripheral controller (12) is designed for carrying out a desired cryptographic operation with the cryptographic key and for communicating a result of the cryptographic operation to the secure microcontroller (10).

7. Data storage medium (SC) according to Claim 6, wherein the data connection (SL) between the secure microcontroller (10) and the peripheral controller (12) is an encrypted data connection.

8. Data storage medium (SC) according to Claim 6 or 7, which furthermore comprises at least one input element (18, 20).

9. Data storage medium (SC) according to Claim 8, wherein the at least one input element (18, 20) is a fingerprint sensor (18) and/or a PIN pad (20) and/or a contactless communication interface (RF).

10. Data storage medium (SC) according to Claim 8 or 9, wherein the at least one input element (18, 20) is connected to the peripheral controller (12).

## Revendications

1. Procédé de traitement d'une clé cryptographique dans un environnement matériel, qui comprend un microcontrôleur sécurisé (10) et un contrôleur périphérique (12) et est réalisée sous la forme d'une unité physique, et la clé cryptographique à traiter est stockée dans le microcontrôleur sécurisé (10), dans lequel, après une authentification mutuelle du microcontrôleur sécurisé (10) et du microcontrôleur périphérique (12), une transmission de la clé cryptographique du microcontrôleur sécurisé (10) au contrôleur périphérique (12) est effectuée, une opération cryptographique souhaitée est effectuée par le contrôleur périphérique (12), et un résultat de l'opération cryptographique est transmis du contrôleur périphérique (12) au microcontrôleur sécurisé (10).

2. Procédé selon la revendication 1, dans lequel, après l'authentification mutuelle du microcontrôleur sécurisé (10) et du contrôleur périphérique (12), une liaison de données chiffrée est établie.

3. Procédé selon la revendication 1 ou 2, dans lequel l'authentification est effectuée sur la base d'un identifiant lu.

4. Procédé selon la revendication 3, dans lequel l'identifiant est un identifiant d'utilisateur et/ou un identifiant biométrique.

5. Procédé selon la revendication 1 ou 2, dans lequel l'authentification est effectuée sur la base d'un chiffrement cryptographique, ou dans lequel l'authentification est effectuée sur la base d'une fonction non clonable physiquement.

6. Support de stockage de données (SC) pour des applications à clé cryptographique, qui est réalisé avec un microcontrôleur sécurisé (10) et un contrôleur périphérique (12) sous la forme d'une unité physique, et avec une clé cryptographique à traiter qui est stockée sur le microcontrôleur sécurisé (10), dans lequel, entre le microcontrôleur sécurisé (10) et le contrôleur périphérique (12), une liaison de données (SL) est prévue par laquelle, après une authentification mutuelle du microcontrôleur sécurisé (10) et du contrôleur périphérique (12), une transmission de la clé cryptographique du microcontrôleur sécurisé (10) au contrôleur périphérique (12) est effectuée, et le contrôleur périphérique (12) est conçu pour effectuer une opération cryptographique souhaitée avec la clé cryptographique et pour transmettre un résultat de l'opération cryptographique au microcontrôleur sécurisé (10).

7. Support de stockage de données (SC) selon la revendication 6, dans lequel la liaison de données (SL) entre le microcontrôleur sécurisé (10) et le contrôleur périphérique (12) est une liaison de données chiffrée.

8. Support de stockage de données (SC) selon la revendication 6 ou 7, qui comprend en outre au moins un élément d'entrée (18, 20).

9. Support de stockage de données (SC) selon la revendication 8, dans lequel ledit au moins un élément d'entrée (18, 20) est un capteur d'empreintes digitales (18) et/ou un clavier NIP (20) et/ou une interface de communication sans contact (RF).

10. Support de stockage de données (SC) selon la revendication 8 ou 9, dans lequel ledit au moins un élément d'entrée (18, 20) est relié au contrôleur périphérique (12).
